# EUROPEAN PATENT APPLICATION

(11) **EP 2 525 577 A1**
(43) Date of publication of application: **21.11.2012**
(21) Application number: 11166946.1
(22) Date of filing: 20.05.2011
(51) Int. Cl.: H04N 13/00

(54) **3D content down-conversion to 2D content**

(71) Applicant: Eldon Technology Limited trading as Echostar Europe, Keighley, Yorkshire BD20 6QW (GB)
(72) Inventor: Dove, Antony Michael, Bradford, West Yorkshire BD13 2LP (GB); Ward, Martyn Ross, Bingley West Yorkshire 8D16 4PJ (GB)
(74) Representative: Reeve, Nicholas Edward

(57) **Abstract**

A system and method provide down-conversion of 3D content to 2D content. A content receiver receives 3D content, down-converts the 3D content into a 2D format, and transmits the content in the 2D format to a content display device Alternatively, the content receiver transmits the 3D content to the content display device in a 3D format, and a wearable viewing device down-converts the 3D video content into a 2D format The wearable viewing device is active or passive and allows some images to be transmitted through the lenses for viewing by the user and other images to be blocked by the lenses to prevent viewing by the user, thereby providing the content in a 2D format. The wearable viewing device for viewing the content in a 2D format offers flexibility to others desiring to watch the 3D content on the content display device in the 3D format displayed.

## Description

### FIELD OF THE INVENTION

This disclosure relates generally to down-converting three-dimensional content ("3D") into content perceptible as two-dimensional ("2D") content utilizing a content receiver or a wearable viewing device that may be communicatively coupled to the content receiver.

### SUMMARY

The present disclosure discloses systems and methods for receiving 3D content at a content receiver and for providing 2D content to a user by way of either an on screen display or through the use of a wearable viewing device such as glasses. Delivering 2D content to the content display device enables all users to view content in a 2D format that initially was received in a 3D format Delivering 3D content to the content display device, while programming a 2D wearable viewing device such as glasses to deliver 2D content, provides flexibility because some users are able to view 3D content in a 3D format and others are able to view 3D content in a 2D format utilizing the 2D wearable viewing device.

According to one implementation, a method for converting three-dimensional formatted content to a two-dimensional format involves receiving three-dimensional formatted content at the content receiver, where the content includes first and second sets of data, the first set of data configured for viewing by a first eye of a user and the second set of data configured for viewing by a second eye of the user; and down-converting the video data in the three-dimensional format into a two-dimensional format utilizing the content receiver, where the down-converting involves two-dimensional harmonizing of the first and second sets of data to generate a single set of two-dimensional data, the two-dimensional data configured for viewing by both eyes of the user simultaneously. The content receiver is utilized to transmit the data formatted into the two-dimensional format to a content display device.

The operation of harmonizing can comprise removing the first set of two-dimensional data from the three-dimensional formatted content, thereby generating the single set of two-dimensional data.

The operation of harmonizing may further comprises doubling the second set of data.

The operation of harmonizing may comprise overlaying video data from the first set with images from the second set of data.

Overlaying the video data can comprise: buffering the images from the first set of data and the second set of data; and overlaying the buffered images from the first set of data with the images from the second set of data.

The operation of harmonizing may comprise formatting the video data into the two-dimensional format by removing a portion of the images from the first and second set of data and overlaying a remaining portion of images from the first set of data with a remaining portion of images from the second set of data.

The method may also comprise utilizing the content receiver to retrieve display parameters for images from the first set and second set of data and merging the images from the first set and the second set of data based on the display parameters.

In another implementation, a system for viewing three-dimensional content in a two-dimensional format utilizing a content receiver includes a wearable viewing device configured to alternately permit and prevent images from passing through lenses of the wearable viewing device The wearable viewing device includes a synchronization unit for synchronizing a status of the lenses to enable and to prevent images from being transmitted through the lenses and a communications unit for communicating with the content receiver. The content receiver includes a processing unit for executing instructions for transmitting three-dimensional video content, the three-dimensional video content corresponding to images to be transmitted to a content display device configured as a three-dimensional display device for viewing by a first eye of a user and to images to be transmitted to the content display device for viewing by a second eye of the user, such that the images are perceptible to the user as three-dimensional images. A communications unit transmits the three-dimensional video content to the content display device in a three-dimensional format and transmits signals to the wearable viewing device communications unit such that images for one of the first eye or the second eye are viewable through the lenses of the wearable viewing device by both eyes of the user simultaneously, and the images for the other of first eye or the second eye are blocked by the lenses and not viewable by the user. The wearable viewing device therefore down-converts the three-dimensional video content such that the images viewable through the lenses are perceived as images in the two-dimensional format.

The lenses of the wearable viewing device may comprise LCD lenses configured to alternate between enabling both the first and the second eye to view images simultaneously and preventing both the first and the second eye from viewing the images simultaneously

The system may further comprise a three-dimensional wearable viewing device configured to permit and prevent images from passing through lenses of the wearable viewing device, wherein the lenses of three-dimensional wearable viewing device is configured to alternate between permitting images to be viewed by the first or the second eye of the user while simultaneously preventing images to be viewed by the other of the first or the second eye.

The wearable viewing device may be wirelessly communicatively coupled to the content receiver.

The content receiver may be configured to enable the two-dimensional format to be selected such that the wearable viewing device enables the user to view the video content in one or the other of the two-dimensional format intended for the first eye and the two-dimensional format intended for the second eye.

The content receiver may be configured to enable the three-dimensional format to be selected such that the wearable viewing device enables the user to view the three-dimensional video content in the three dimensional format

The processing unit may be further configured to down-convert the three-dimensional video data into the two-dimensional format, wherein down-converting comprises converting the video data into a format perceptible as two-dimensional content.

In another implementation, a system for viewing three-dimensional content in a two-dimensional format includes a wearable viewing device with polarized lenses configured to shield both eyes of a user and allow light having a first polarization through the polarized lenses and to prevent light having a second polarization through the polarized lenses. A content receiver incudes a processing unit for executing instructions for delivering three-dimensional video content, where the three-dimensional video content includes a first and second set of images interleaved with one another, and the first set of images include the first polarization and the second set of images include the second polarization. A communications unit transmits the three-dimensional video content to the content display device. Utilizing the system, the first set of images may be viewed through the polarized lenses and the second set of images is prevented from being viewed through the polarized lenses.

The system may further comprise a three-dimensional wearable viewing device comprising lenses with a first polarized lens and a second polarized lens, wherein the first set of images may be viewed through the first polarized lens and the second set of images may be viewed through the second polarized lens

The system may also further comprise an additional wearable viewing device comprising polarized lenses, wherein the second set of images may be viewed through the polarized lenses and the first set of images is prevented from being viewed through the polarized lenses.

The polarized lenses of the wearable viewing device may be configurable to allow one of light having a first polarization through the polarized lenses, light having a second polarization through the polarized lenses, and light of the first and the second polarization through the polarized lenses.

The wearable viewing device can be communicatively coupled to the content receiver and the content receiver controls the polarization of the lenses.

The wearable viewing device may comprise a selection button for selecting the polarization of he lenses.

It is to be understood that both the foregoing general description and the following detailed description are for purposes of example and explanation and do not necessarily limit the present disclosure. The accompanying drawings, which are incorporated in and constitute a part of the specification, illustrate subject matter of the disclosure Together, the descriptions and the drawings serve to explain the principles of the disclosure.

### BRIEF DESCRIPTION OF THE DRAWINGS

Figure 1 is a block diagram illustrating a system for receiving 3D content at a content receiver and for providing 2D content to a user by delivering 2D content to an on screen display, or by delivering 3D content to an on screen display, which is perceived as 2D content through the use of a wearable viewing device.
Figure 2A is a flow chart illustrating a method for receiving 3D content at a content receiver and for providing 2D content to a user by delivering 2D content to an on screen display. This method may be performed by the system of Figure 1.
Figures 2B and 2C are a flow charts illustrating methods for receiving 3D content at a content receiver and for providing 2D content to a user by delivering 3D content to an on screen display, which is perceived as 2D content through the use of a wearable viewing device. These methods may be performed by the system of Figure 1.
Figures 3A-3C are diagrams illustrating a system for receiving 3D content at a content receiver and for providing 2D content to a user. The system may be the system of Figure 1.

### DETAILED DESCRIPTION OF THE EMBODIMENTS

The description that follows includes sample systems, methods, and computer program products that embody various elements of the present disclosure. However, it should be understood that the described disclosure may be practiced in a variety of forms in addition to those described herein.

Electronic devices such as content receivers (like set top boxes) generally receive content from a content stream and decode and transmit the video, audio and data content from the content stream to a content display device (such as a television). Some content display devices are capable of projecting the content to a display screen in a way such that the images displayed are perceived by the user as a three-dimensional ("3D") image with depth. The perception of a 3D image projecting from the display screen is due to the content receiver transmitting content as a first image and a second image, such as a left image and a right image or as a top image and a bottom image, each of which are generally offset (such as arranged adjacent, side-by-side, left and right, and top and bottom) from one another, which (generally with the aid of 3D glasses) results in the human eye perceiving the two images as one image projecting out from the display screen of a 3D content display device (such as a 3D television). For purposes of discussion, only the first image and the second image are described in connection with 3D imaging, but it will be understood that a left or top image or a right or bottom image may be thought of as being interchangeable with the term first image and that the other of the right or left or top or bottom image may be thought of as interchangeable with the term second image. The 3D image displayed as the first image and the second image may be generated from a two-dimensional image ("2D") utilizing hardware resident in the content receiver box, or the content receiver may receive content formatted into 3D, i.e., split into left and right images. For example, a video player (e.g., a DVD player) or a content provider (e.g., satellite cable company) may transmit a content stream to the content display device in a 3D format.

However, when content is delivered to the content receiver in a 3D format, a user utilizing the content receiver and a communicatively coupled 3D content display device may prefer to watch the content in a 2D format instead. Moreover, when multiple users are utilizing the content receiver and the communicatively coupled 3D content display device, some of the users may prefer to watch the content in a 3D format while others may prefer to watch the content in a 2D format.

The present disclosure discloses systems and methods for utilizing a content receiver to receive 3D content while delivering 20 content to the user through the use of a content display device or through the use of a wearable viewing device such as 2D glasses.

The content receiver, in some implementations, receives 3D content from a content provider or from another source like a video source (such as a 3D DVD player) or from the Internet. The content receiver utilizes the data received as 3D content to down-convert the data into 2D content. Down-conversion may involve utilizing only a portion of the 3D content. For example, 3D content is generally received as two sets of data for delivery to the content display device. The first set of data is viewed by the first eye of the user and the second set of data is viewed by the user's second eye. The content receiver may be programmed to recognize only one set of data and to discard the other set of data, and the recognized set of data may be formatted by the content receiver for display as 2D content. Alternatively, down-converting may involve duplicating and/or synchronizing the data received as 3D content for 2D display. For example, the sets of data for the first and the second eye may be buffered so that the first image and the second image are displayed simultaneously, as opposed to in an alternating fashion. In another example, the content receiver may be programmed to recognize portions of the first and second data sets and to buffer the recognized portions for display as 2D content. Formatting into 2D content may involve modifying the first and the second sets of data for simultaneous (e.g., non-alternating), non-offset display. This is in contrast to 3D content, which is generally transmitted to the content display device as an alternating, offset display. The 2D formatted content is transmitted to the content display device (such as a 3D television) for 2D display. In the examples above, down-converting may involve two-dimensional harmonizing of the first and second sets of data to generate a single set of two-dimensional data configured for viewing by both eyes of the user simultaneously. It will be understood that 2D display refers to content that is perceived by the user as 2D content that does not appear to project from the screen, which is in contrast to 3D display that is perceived by the user as 3D content having depth,

The content receiver, in another implementation, is communicatively coupled to a wearable viewing device that enables the viewer to perceive 3D content displayed on a display screen in a 2D format. In this implementation, the content receiver receives 3D content and transmits the 3D content to a content display device such as a 3D television. The content receiver is also communicatively coupled to the wearable viewing device for synchronization of the images viewable by the user with one set of data from the 3D content, e.g., the left eye data or the right eye data. For example, a user, utilizing the wearable viewing device, signals to the content receiver that the user desires to view the 3D content in a 2D format. In response, the content receiver delivers control signals to the wearable viewing device so that content is transmitted through the lenses for the user to view with both eyes, e,g., that otherwise would be intended for one eye in a 3D mode, and the content otherwise intended for the other eye is blocked from view. The control signals may be sent via an infrared or radio beam to produce the controlling effect, e.g., the shuttering effect, to result in the down-conversion of the 3D content into a 2D format. The user selecting to view content in the 2D format may also select which of the first set or the second set of data to view, e.g., the first eye content or the second eye content. In this system, another user may utilize another wearable viewing device and may select whether to watch 3D or 2D content. Selecting 2D content synchronizes the wearable viewing device as described above. Otherwise selecting 3D content synchronizes the wearable viewing device so that one eye views the first set of the 3D content intended for the first eye and the second eye views the second set of the 3D content intended for the second eye. In this implementation, the system provides Flexibility for multiple users viewing the same content at the same time because each user may select whether to view the 3D images displayed by the content display device in a 3D format or in a 2D format.

In another implementation, the content receiver and a polarized viewing device enables the viewer to perceive content in a 2D format when the content is displayed as 3D content on a content display device. In this implementation, the content receiver receives 3D content and transmits the 3D content to a content display device such as a 3D television The 3D content is delivered by the content display device as images having light of at least two polarizations. The polarized viewing device, such as glasses, allows light of only one of the polarizations to be viewed. In this system, the user views the content in a 2D format due to light of the other polarization(s) not being transmitted through the polarized lenses of the polarized viewing device. The system may further include other polarized viewing devices having a different but single polarization. This enables the user to select which type of polarized light to view from the multiple sets of polarized light contained with in the 3D content. In addition, the system may include a 3D polarized viewing device that allows one eye of the user to view light of a certain polarization, while the other eye views light of another polarization, which results in the viewer perceiving content in a 3D format having depth. In this implementation, the system provides flexibility for multiple users viewing the same content at the same time because each user may select whether to view the 3D images displayed by the content display device in a 3D format or in a 2D format.

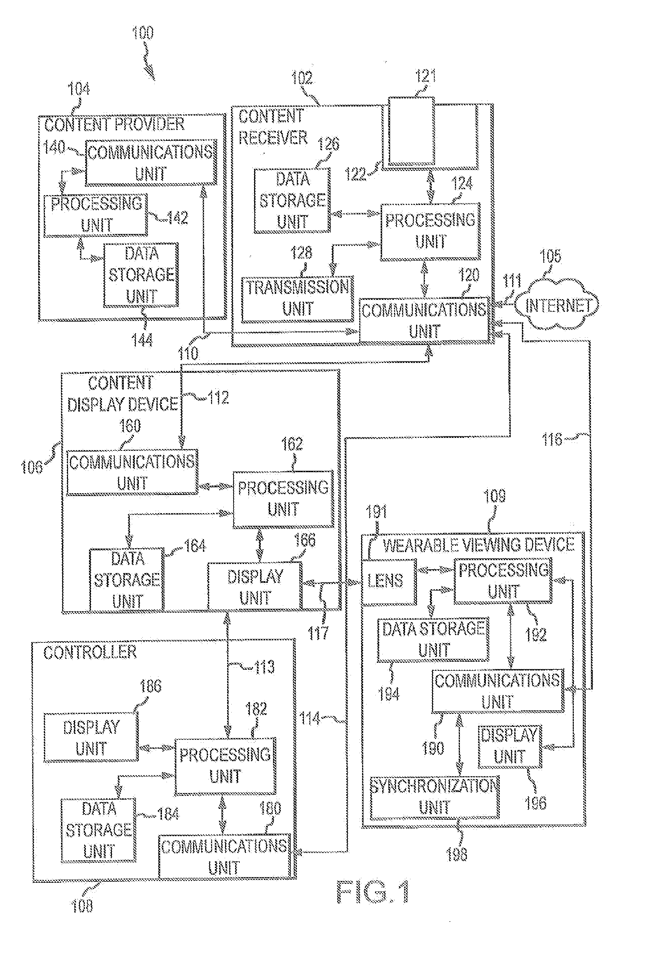

Figure 1 is a block diagram illustrating a system 100 for receiving 3D content utilizing a content receiver and providing 2D content to the user. The system 100 includes a content receiver 102 (such as a set top box) for receiving and transmitting content (such as television programming and on screen display content), a content provider 104 for transmitting the content (such as a satellite or cable programming service provider), the internet or a network connection 105, a content display device 106 for receiving and displaying the content (such as a television), a controller 108 (such as a remote control) for transmitting data such as control signals to the content receiver 102, and a wearable viewing devices 109 (such as active or passive glasses configured according to the implementations provided herein).

The content receiver 102 is a device for receiving content from the content provider 104 and other external sources, for processing or decoding the content and for transmitting the content to the content display device 106. The content receiver 102 is, for example, a set top box, a television receiver, a digital video recorder, a computing device, a gaming device, or a television. The content receiver 102 is generally located at a user's location (such as a user's residence or business). The content receiver 102 is operable to receive 2D and 3D content from the content provider 104 (and/or another external source) by way of the transmission link 110. Such content is received by the communications unit 120 of the content receiver 102. The content receiver 102 is operable to receive 2D and 3D content from the Internet or network by way of transmission link 111. The content receiver 102 is also operable to receive 2D or 3D content from an external source 121 by way of data port 122 (e.g., USB port). For example, the data port 122 may be a USB port connectable to a flash drive, a mobile computing device such as a phone (e.g., a smart phone and/or a camera phone), a digital tablet, and the like having 2D or 3D content data stored therein. The data from the content provider 104 and the external source 121 is provided to the processing unit 124 for executing instructions stored in the data storage unlit 126 and for providing content to the content display device 108 and/or to audio speakers via the transmission unit 128. The processing unit 124 executes instructions stored in the data storage unit 126 for down-converting 3D content into a 2D format. The processing unit 124 also executes instructions stored in the data storage unit 126 for synchronizing the delivery of images with a shutter speed of the wearable viewing device 109

The content provider 104 (such as a satellite programming company, a cable company, an Internet service provider, e,g., an online video service or Internet video provider and the like) is generally remotely located from the content receiver 102. The content provider 104 utilizes a communications unit 140, a processing unit 142 and a data storage unit 144 to receive, manage and store content, which is transmitted at least in a 3D format, but may also be transmitted in 2D format, by the communications unit 140 to the communications unit 120 of the content receiver 102 via the transmission link 110. Although not shown, a video player (such as 3D DVD player) may also be communicatively coupled to the content receiver 102 by way of the transmission link 110 and may transmit content in 3D format.

The content display device 106 is generally arranged proximate to and is communicatively coupled to the content receiver 102 and displays 2D and 3D content. While content display device 106 and the content receiver 102 are depicted as separate components in Figure 1, it will be appreciated that the content receiver 102 may be incorporated with the content display device 106. The content display device 106 is, for example, a 3D television, a 3D computer screen, a 3D video screen, or any other 3D display device for displaying 3D content or 3D images capable of being perceived by a user as having depth. As provided herein, the content display device 106 configured for 3D display is also configured to deliver content in a 2D format. The content display device 106 includes a communications unit 160. which receives 2D and 3D content from the communications unit 120 of the content receiver 102 by way of the transmission link 111. The content display device 106 also includes a processing unit 162 for executing instructions stored in a data storage unit 164. In addition, the content display device 106 includes a display unit 166 for displaying 2D and 3D content received from the content receiver 102.

The controller 108 is generally provided in an area proximate the content receiver 102 and is communicatively coupled to the content display device 106 by way of the transmission link 113, and is communicatively coupled to the content receiver 102 by way of the transmission link 114. The controller 108 is, for example, a remote control, such as a universal remote control, a dedicated remote control, or a computing device programmed to send command signals to the content receiver 102. The controller 108 includes a communications unit 180 for sending and receiving information, a processing unit 182 for executing instructions stored in a data storage unit 184, and an optional display unit 186 for displaying or presenting information stored within the data storage unit 184 such as information related to a command sent to the content receiver 102.

The wearable viewing device 109 may be utilized by the user viewing content on the content display device 106 in implementations where the 3D content is transmitted by the content receiver 102 for display by the content display device 106 in a 3D format. The wearable viewing device 109 down-converts the 3D images into a 2D format. The wearable viewing device may be an active or passive device such as active or passive glasses, described below. The wearable viewing device 109 may include a communications unit 190 communicatively coupled to the communications unit 120 of the content receiver 102 by way of transmission link 116 (such as a wired or wireless, RF or IR link), lenses 191, a processing unit 192 for executing instructions stored in a data storage unit 194 for controlling the status of the lenses 191 (e.g., an opaque or transparent status), an optional display unit 196 that may be used to display user selections relating the format of content the user prefers to view, and optionally, a synchronization unit 198 for synchronizing the status of the tenses 191 With the video content displayed on the display unit 166 of the content display device 106. The wearable viewing device 109 is also communicatively coupled to the display unit 166 of the content display device 106 by way of the transmission link 117. When 3D content is displayed in a 3D format on the display unit 166 of the content display device 106. the wearable viewing device 109 is programmed or configured to enable only a portion of the 3D content displayed to be transmitted through the lenses 191 for the user to view. It will be appreciated that the lenses 191 of the wearable viewing device may be utilized for viewing by both eyes of the user and may correspond to one or more lenses. For an active wearable viewing device 109, the lenses may be controlled to generate the opaque and transparent configuration for both eyes of the user at the same time, e g., opaque for both eyes and then transparent for both eyes. For a passive wearable viewing device 109, the polarization of the lenses may be the same such as by providing each lens with a left channel polarization or each lens with a right channel polarization.

Returning to the content receiver 102, in implementations where the 3D content is down-converted to a 2D format, the processing unit 124 executes instructions stored in the data storage unit 126 for receiving the 3D content and for formatting the 3D content into a 2D format so that the transmission unit 138 transmits content to the content display device 106 in a format that is perceptible by the user as 2D content. Down-converting may involve the processing unit 124 formatting the video data such that one of the first set or the second set of data is removed and the other of the first set or the second set of data is formatted into the 2D format. For example, images intended for the left eye or the right eye may be dropped by the processing unit 124 and the retained images intended for the other of the left or right eye may be formatted and transmitted to the content display device 106. In some implementations, down-converting may involve doubling the remaining set of data. Down-converting may alternatively include overlaying video data from one of the first set or the second set of data with images from the other of the first set or the second set of data. This may involve buffering the images from the first set of data and the second set of data, overlaying the buffered images from the first set of data with the images from the second set of data and/or overlaying the buffered images from the second set of data with the images from the first set of data. In another implementation, the processing unit 124 may execute instructions for performing a blend of dropping images and overlaying images. For example, down-converting may involve removing a portion of the images from the first set and the second set of data and overlaying the remaining images from the first set of data with the remaining images from the second set of data. In the examples above, down-converting may involve two-dimensional harmonizing of the first and second sets of data to generate a single set of two-dimensional data configured for viewing by both eyes of the user simultaneously.

The implementations provided above may also involve the content receiver 124 retrieving display parameters such as height, width and a starting position data for images from the first set and second set of data and merging the images from the first set and the second set of data based on the retrieved display parameters. For example, in a 3D format, images intended for the left eye and the right eye may be offset and/or sized differently with respect to each another, and the processor 124 may execute instructions for centering and/or resting the images to reformat the 3D images into a 2D format, which may allow the image in the 2D format to be clearly viewed by the user at the content display device 106. In another example, the content receiver 124 may retrieve color data for the images in the 3D format and may after the color of the images when formatting the 3D content into the 2D format. For example, images intended for one eye may have a comparatively higher green content than the images intended for the other eye, and images intended for the other eye may have a comparatively higher red content The content receiver 124 may normalize the coloring of the images so that the user viewing the 2D content views the coloring as would be intended for coloring of the images for 3D viewing but in a 2D format.

Returning to the wearable viewing device 109, in this example configured as an active wearable viewing device, the wearable viewing device 109 may include a communications unit 190, lenses 191, a processing unit 192, a data storage unit 194, an optional display unit 198. and a synchronization unit 198 for synchronizing the status of the lenses 191 with the video content displayed on the display unit 166 of the content display device 106. The wearable viewing device 109 may be communicatively coupled with the content receiver 102. and the lenses 191 may be controlled by the processing unit 124 of the content receiver 102 that sends control signals to the synchronization unit 198 communicatively coupled to the processing unit 192 of the wearable viewing device 109. The control signals instruct the lenses 191 to alternately switch between a transparent and an opaque configuration in a synchronized manner with the images displayed on the display unit 166 of the content display device 106 to permit and prevent the images from passing through the tenses For example, the lenses 191 may be configured as an electronically or mechanically controlled shutter device The lenses 191 open or are turned transparent to allow images to pass therethrough and into the user's eyes. The lenses 191 close or are turned opaque to prevent images from passing therethrough, thereby preventing the user from viewing the image displayed on the content display device 106. When a 2D format is selected for view, the lenses 191 are open, unblocked, of transparent and transmits the images through the lenses 191 for content normally intended for the user's left eye (e.g., a first set of data), but this content is viewed by both eyes of the user. The lenses 191 then closes, blocks or turns opaque for images normally intended for the user's right eye (e.g., a second set of data) so that the user is not able to view the right eye content at all. As an alternative, the right eye content may be viewed by both eyes and the left eye content may be blocked. Thus, while 3D content is displayed on the content display device 106, the wearable viewing device 109 down-converts or harmonizes the displayed images into a 2D format by controlling the viewable content so that a single set of two-dimensional is viewed by both eyes of the user simultanoeusly. In a further implementation, the content receiver 102 and the wearable viewing device 109 may be utilized to synchronize the lenses 191 for 2D or 3D viewing. In this implementation, the wearable viewing device 109 enables the user to select whether to view the 3D content in a 2D format (e.g., by down-converting the images) or in a 3D format (e.g., by alternating viewing images between the left eye and the right eye of the user).

According to certain implementations, the wearable viewing device 109 configured as a passive wearable viewing device (such as polarized glasses) may also include the aforementioned components, but the components may not necessarily be communicatively coupled to the lenses 191. Passive glasses may have polarized lenses configured to allow one type of polarized light to be transmitted through the lenses 191, while preventing other types of polarized light from passing through. In some implementations, multiple sets of passive glasses may be provided, each with a single polarization, but the polarizations between the sets of glasses are different. This allows the user to select which polarization to use when viewing content. Thus, while 3D content is displayed on the content display device 106, the wearable viewing device 109 down-converts the displayed images into a 2D format by controlling the viewable content passing though the polarized lenses 191 so that a single set of two-dimensional is viewed by both eyes of the user simultaneously. Furthermore, in addition to one or more sets of passive glasses having lenses of a single polarization, passive glasses having lenses with two polarizations (e.g., 3D glasses) may be provided. Alternatively, the passive wearable viewing device 109, such as polarized glasses, may also be configured to switch the polarization of the lenses 191. In this regard, the passive wearable viewing device 109 may be electronically or mechanically controlled to change the polarization of the lenses 191. Rather than a user selecting a wearable viewing device 109 having lenses 191 with one or another polarization as described above, the user utilizes a single wearable viewing device 109 configured to switch the polarization of the lenses 191 depending on the 2D format the user prefers, e.g., the left eye view or the right eye view. Moreover, the wearable viewing device 109 may be configurable to have two different polarizations or may include two lenses, e.g., one lens for each eye, and may be configured to enable the user to select a polarization for each eye or lens, such as by utilizing a selection button. Thus, the user may select which 2D format to view, e.g., a single polarization for both eyes, or may select to view the content in a 3D format, e.g., select a different polarization for each eye.

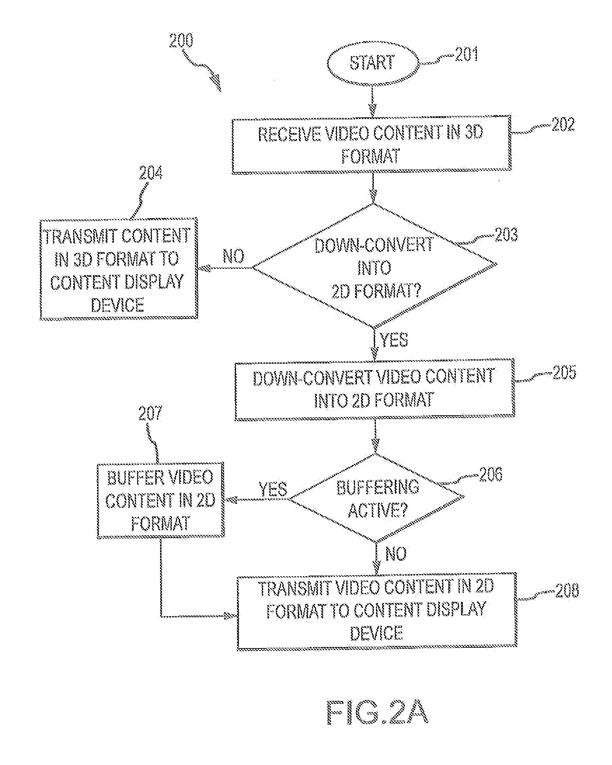

Figure 2A illustrates a method 200 for providing 2D on screen display content utilizing the content receiver 102. The method 200 may be performed by the system 100 of Figure 1. The flow begins at block 201 and proceeds to block 202 where the content receiver 102 receives content in a 3D format. The flow then proceeds to block 203 where the processing unit 124 determines whether the video content is to be down-converted or harmonized. If not, the flow proceeds to block 204 where the 3D content is transmitted to the content display device 106 in the 3D format. If the video content is to be down-converted or harmonized, the flow then proceeds to block 205 where the processing unit 124 down-converts or harmonizes the video data in the 3D format into a 3D format. The flow proceeds to block 206 where the processing unit 124 determines whether buffering of the content in the 2D format is active. If so, the flow proceeds to block 207 where the processing unit buffers the video content in the 2D format and the flow then proceeds to block 208 where the buffered video content is transmitted to the content display device 106. If buffering is not active, the flow proceeds to block 208 where the non-buffered content is transmitted to the content display device 106.

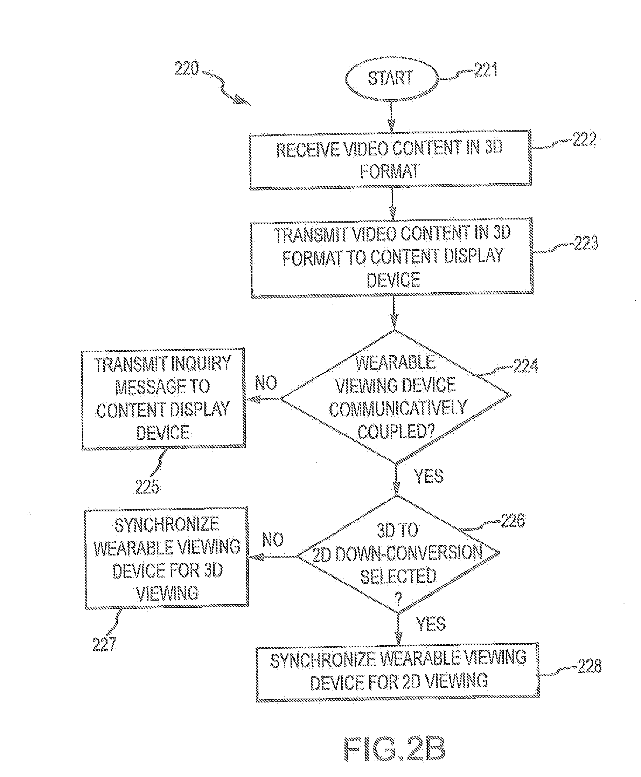

Figure 2B illustrates a method 220 for viewing content in a 2D format that is delivered to the content display device as 3D content The method 220 may be performed by the system 100 of Figure 1. The flow begins at block 221 and proceeds to block 222 where the content receiver 102 receives content in a 3D format. The flow proceeds to block 223 where the 3D content is transmitted to the content display device 106 in the 3D format. The flow then proceeds to block 224 where the processing unit 124 of the content receiver 102 determines whether a wearable viewing device 109 is communicatively coupled to the content receiver 102. If not, the flow proceeds to block 225 where an inquiry message is transmitted to the content display device 106, for example instructing the user to utilize the wearable viewing device 109. If the wearable viewing device 109 is communicatively coupled to the content receiver 102, the flow proceeds to block 226 where the content receiver determines whether 3D to 2D down-conversion or harmonization is selected. If not, the flow proceeds to block 227 where the content receiver 102 synchronizes the wearable viewing device 109 for 3D viewing. If down-conversion or harmonization is selected, the flow proceeds to block 228 where the content receiver synchronizes the wearable viewing device 109 with the images displayed on the content display device 106 for viewing in a 2D format.

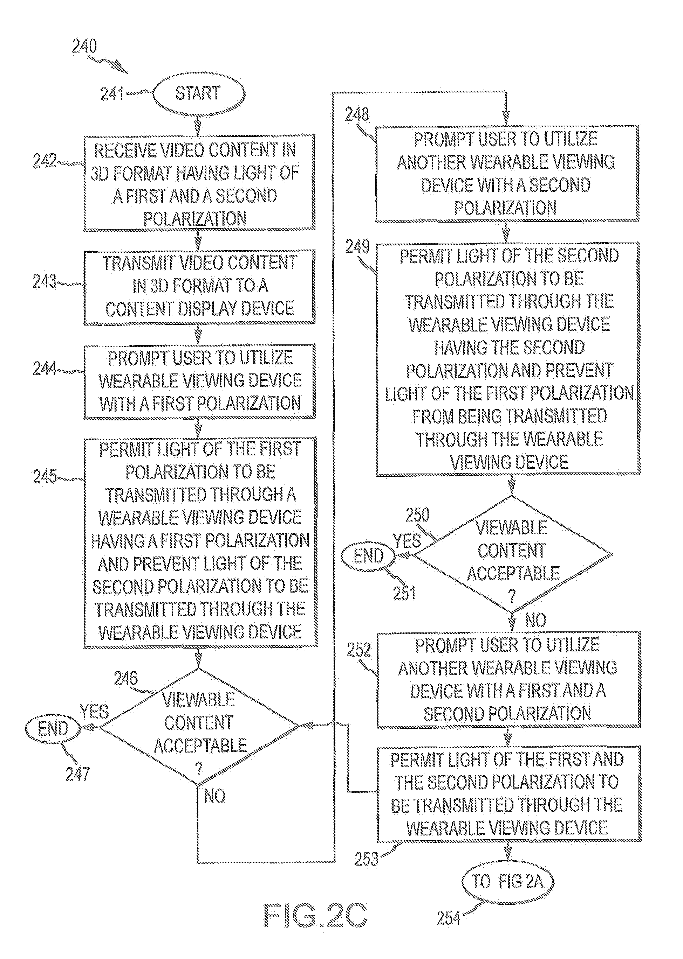

Figure 2C illustrates a method 240 for viewing content in a 2D format that is delivered to the content display device as 3D content. The method 240 may be performed by the system 100 of Figure 1. The flow begins at block 241 and proceeds to block 242 where the content receiver 102 receives content in a 3D format having light of a first polarization and a second polarization. The flow proceeds to block 243 where the 3D content is transmitted to the content display device 106 in the 3D format. The flow then proceeds to block 244 where the processing content receiver 102 transmits a message to the content display device prompting the user to utilize a passive wearable viewing device with a first polarization. The flow then proceeds to block 245 where light of the first polarization from the content display device is transmitted through the wearable viewing device and hght of the second polarization is prevented from being transmitted through the wearable viewing device. The flow then optionally proceeds to block 246 where the content receiver 102 prompts the user to select whether the 2D viewable content is acceptable. If acceptable, the flow proceeds to end block 247. If the 2D viewable content is not acceptable, the flow proceeds to block 248 where the content receiver 102 prompts the user to utilize another wearable viewing device having a second polarization different from the first polarization. The flow proceeds to block 249 where light of the second polarization is transmitted through the wearable viewing device and light of the first polarization is prevented from being transmitted through the wearable viewing device. It will be appreciated that blocks 246-249 provide prompts to the user to utilizing a second wearable viewing device in order to view the 2D content in a different format than provided by the first wearable viewing device in order to determine whether the user prefers to view one or the other portions (e.g., left eye portion or right eye portion) of the 3D content in a 2D format.

Continuing with Figure 2C, the flow may optionally proceed to block 250 where the content receiver 102 prompts the user to select whether the 2D viewable content is acceptable. If acceptable, the flow proceeds to end block 251. If not acceptable, the flow proceeds to block 252 where the content receiver 102 prompts the user to utilize another wearable viewing device having a first and a second polarization (e.g., 3D glasses). The flow then proceeds to block 253 where light of the first and second polarizations is transmitted through the wearable viewing device. It will be appreciated that blocks 250-253 correspond an attempt to provide acceptable viewing content to the user, and although the user may prefer to watch 3D content in a 2D format, the user may decide that upon viewing the 3D content in the 3D format, the user may decide the 3D format is preferred. The flow may optional proceed back to block 246 until the user is able to view acceptable content utilizing the various wearable viewing devices. The flow may optionally proceed to block 254 where the content receiver 102 implements the method of Figure 2A in which the content receiver 102 is utilized to down-convert the 3D content to a 2D format and to transmit the content in the 2D format to the content display device 106. In this case, if multiple users are viewing the content on the content display device 106, each will view only 20 content.

In implementations where the wearable viewing device 109 is configurable to change polarizations, the user may utilize the same wearable viewing device 109 and select to after the polarization of the lenses 191 while following the method of Figure 2C. In alternative implementations where an active wearable viewing device is utilized, such as in the method of Figure 2B, the user may be prompted in a similar manner to blocks 246 and 250 in order to determine the most acceptable viewing format for the user, e.g., 2D format with the content viewed through lenses 191 being content intended for the left eye, 2D format with the content viewed through lenses 191 being content intended for the right eye, or 3D format with lenses alternating viewable content between the left and the right eye of the user.

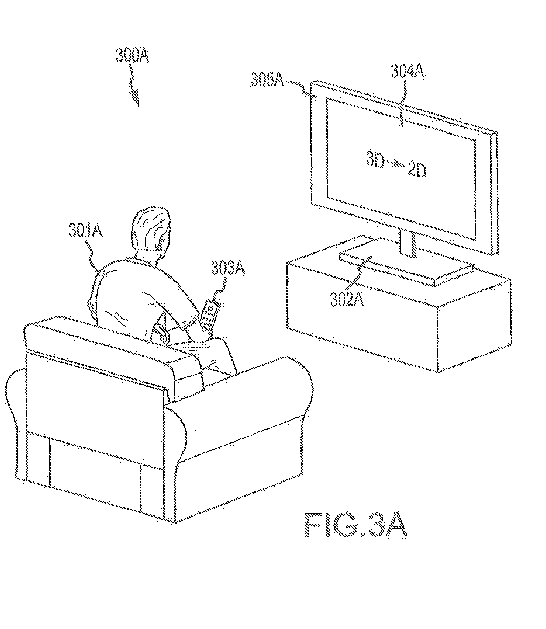

Figures 3A-3C are diagrams illustrating a user 3014-301C utilizing a system 300A-300C for providing 2D content utilizing the content receiver 302A-302C. The system 300A-300C may be the system 100 of Figure 1. As illustrated in Figure 3A, the user 301A at the content receiver 302A generally utilizes a controller 303A to select down-conversion or harmonization of the 3D content into a 2D format for viewing on the display screen 304A of the content display device 305A configured as a 3D device for displaying content in a 3D format. The content receiver 302A receives the selection from the controller and utilizes the processing unit 124 to down-convert or harmonize the video data from the 3D format into a 2D format. The content receiver 302A transmits the video data in the 2D format to the content display device 305A for the user 301A to view the content in a 2D format on the display screen 304A.

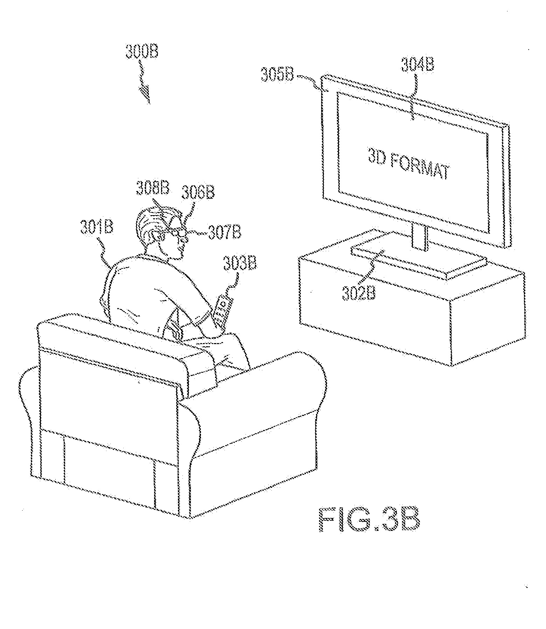

Figure 3B illustrates the system 300B in which the user utilizes a wearable viewing device 306B to view content provided in a 3D format on the display screen 304B of the content display device 305B but in a 2D format due to the content receiver 302B synchronizing the status of the lenses 307B of the wearable viewing device 306B to allow certain images (e.g., left eye images) to be transmitted through the lenses 307B for both eyes of the user 301B to view, and to prevent other images (e.g., right eye images) from being transmitted through the lenses 307B, thereby preventing the user 301 B from viewing these other images. By the content receiver 302B controlling the rate in the change in status of the lenses 307B of the wearable viewing device 306B, the user 301B views only a portion of the content displayed on the display screen 304B in the 3D format, which results in the down-conversion or harmonization of the image into a 2D format. The content receiver 302B may also prompt the user to make selections utilizing the controller 303B and/or the wearable viewing device 306B having a selection button 308B for sending control signals (e.g., synchronization signals) to the content receiver 302B. In addition, the content receiver 302B may prompt the user to place the wearable viewing device 306B in front of the user's eyes.

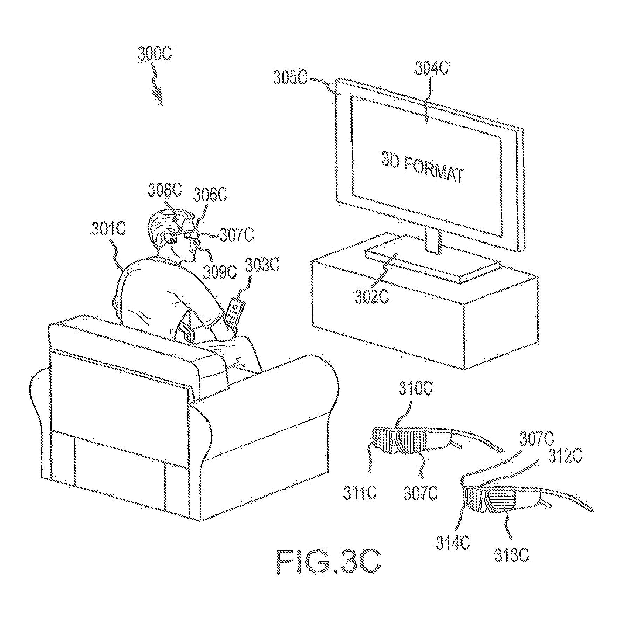

Figure 3C illustrates the system 300C in which the user utilizes a wearable viewing device 306C to view content provided in a 3D format on the display screen 304C of the content display device 305C but in a 2D format due to the polarization 309C of the lenses 307C of the wearable viewing device 306C. The polarization 309C enables light of a first polarization, and therefore images projecting with the light of the first polarization from the display screen 304C, to be transmitted through the lenses 307C of the wearable viewing device 306C. Other light, such as light of a second polarization, is filtered out from the lenses 307C of the wearable viewing device 306C, thereby preventing the user 301C from viewing the other light. As a result, the user 301C utilizing wearable viewing device 306C views the 3D images displayed on the display screen 304C in a 2D format. Thus, while 3D content is displayed on the content display device 106, the wearable viewing device 306C down-converts or harmonizes the displayed images into a 2D format by controlling the viewable content so that a single set of two-dimensional is viewed by both eyes of the user simultaneaously. In some implementations, the user 301C may select from a variety of wearable viewing devices 306C, 310C and 312C. The wearable viewing devices 306C, 310C each include a single type of polarization in the lenses 307C so that light of only a single type of polarization transmits through the lenses 307C. For example, white only light of a first polarization transmits through the lenses 307C having the first polarization 309C associated with the wearable viewing device 306C, by utilizing the wearable viewing device 310C, the light of the first polarization is blocked from being transmitted through the lenses 307C having a second polarization 311C. For wearable viewing device 310C, due to the polarization 311C of the lenses 307C, only light having the second polarization is transmitted through the lenses 307C of the wearable viewing devices 310C. By utilizing the viewing devices 306C, 310C, the viewer perceives the 3D content displayed on the display screen 304C in a 2D format. With respect to the wearable viewing device 312C, the lenses 307C includes two different polarizations 313C and 314C. Light of the first polarization is transmitted through the lens of the first polarization 313C and blocked from being transmitted through the lens 307C of the second polarization 314C, while light of the second polarization is transmitted through the lens 307C of the second polarization 314C and is blocked from being transmitted through the lens of the first polarization 314C. Accordingly, for the wearable viewing device 312C, the viewer perceives the 3D content displayed on the display screen 304C in a 3D format. In some implementations where the wearable viewing device 306C is configured to enable the polarizations of the lens 307C to be changed, the polarization of the arises may be selected to enable the user to view the 3D content displayed on the display screen 304C in a first 2D format, a second 2D format, or in a 3D format. In such an implementation, the wearable viewing device 306C may be communicatively coupled to the content receiver 302C for the user 301C and/or the wearable viewing device 306C to interact with the content receiver 302C to control the polarization of the lenses 307C, such 88 by utilizing selection button 308C for sending control signals (e g., polarization selections signals) to the content receiver 302C.

In the present disclosure, the methods disclosed may be implemented as sets of instructions or software readable by a device. Further, it is understood that the specific order or hierarchy of steps in the methods disclosed are examples of sample approaches. In other embodiments, the specific order or hierarchy of steps in the method can be rearranged while remaining within the disclosed subject matter. The accompanying method claims present elements of the various steps in a sample order, and are not necessarily meant to be limited to the specific order or hierarchy presented

The above disclosure may be provided as a computer program product, or software, that may include a data storage units provided as non-transitory machine-readable medium having stored thereon instructions, which may be used to program a computer system (or other electronic devices) to perform a process according to the present disclosure. A non-transitory machine-readable medium includes any mechanism for storing information in a form (e.g., software, processing application) readable by a machine (e.g., a computer). The non-transitory machine-readable medium may take the form of, but is not limited to a magnetic storage medium (e.g., floopy diskette, video cassette, and so on); optical storage medium (e.g., CD-ROM): magneto-optical storage medium; read only memory (ROM); random access memory (RAM): erasable programmable memory (e.g., EPROM and EEPROM); flash memory; and so on.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it will be understood that these embodiments are illustrative and that the scope of the disclosure is not limited to them. Many variations, modifications, additions, and improvements are possible. More generally, embodiments in accordance with the present disclosure have been described in the context or particular embodiments. Functionality may be separated or combined in blocks differently in various embodiments of the disclosure or described with different terminology. These and other variations, modifications, additions, and improvements may fall within the scope of the disclosure as defined in the claims that follow.

## Claims

1. A method for converting three-dimensional formatted content to a two-dimensional format, comprising:
receiving three-dimensional formatted content at the content receiver, the content comprising first and second sets of data, the first set of data configured for viewing by a first eye of a user and the second set of data configured for viewing by a second eye of the user;
down-converting the video data in the three-dimensional format into a two-dimensional format utilizing the content receiver, wherein the down-converting comprises two-dimensional harmonizing of the first and second sets of data to generate a single set of two-dimensional data, the two-dimensional data configured for viewing by both eyes of the user simultaneously; and
utilizing the content receiver to transmit the data formatted into the two-dimensional format to a content display device.

2. The method of claim 1, wherein the operation of harmonizing comprises removing the first set of two-dimensional data from the three-dimensional formatted content, thereby generating the single set of two-dimensional data.

3. The method of claim 2, wherein the operation of harmonizing further comprises doubling the second set of data.

4. The method of claim 1, wherein the operation of harmonizing comprises overlaying video data from the first set with images from the second set of data.

5. The method of claim 4, wherein overlaying the video data comprises:
buffering the images from the first set of data and the second set of data; and overlaying the buffered images from the first set of data with the images from the second set of data.

6. The method of claim 1, wherein the operation of harmonizing comprises formatting the video data into the two-dimensional format by removing a portion of the images from the first and second set of data and overlaying a remaining portion of images from the first set of data with a remaining portion of images from the second set of data.

7. The method of claim 1, further comprising utilizing the content receiver to retrieve display parameters for images from the first set and second set of data and merging the images from the first set and the second set of data based on the display parameters.

8. A system for viewing three-dimensional content in a two-dimensional format utilizing a content receiver, comprising:
a wearable viewing device configured to alternately permit and prevent images from passing through lenses of the wearable viewing device, the wearable viewing device comprising a synchronization unit for synchronizing a status of the lenses to enable and to prevent images from being transmitted through the lenses and a communications unit for communicating with the content receiver;
the content receiver comprising:
a processing unit for executing instructions for transmitting three-dimensional video content, the three-dimensional video content corresponding to images to be transmitted to a content display device configured as a three-dimensional display device for viewing by a first eye of a user and to images to be transmitted to the content display device for viewing by a second eye of the user, such that the images are perceptible to the user as three-dimensional images; and
a communications unit for:
transmitting the three-dimensional video content to the content display device in a three-dimensional format; and
transmitting signals to the wearable viewing device communications unit such that images for one of the first eye or the second eye are viewable through the lenses of the wearable viewing device by both eyes of the user simultaneously and the images for the other of first eye or the second eye are blocked by the lenses and not viewable by the user, whereby the wearable viewing device down-converts the three-dimensional video content such that the images viewable through the lenses are perceived as images in the two-dimensional format.

9. The system of claim 8, wherein the lenses of the wearable viewing device comprise LCD lenses configured to alternate between enabling both the first and the second eye to view images simultaneously and preventing both the first and the second eye from viewing the images simultaneously.

10. The system of claim 8, further comprising a three-dimensional wearable viewing device configured to permit and prevent images from passing through lenses of the wearable viewing device, wherein the lenses of three-dimensional wearable viewing device is configured to alternate between permitting images to be viewed by the first or the second eye of the user while simultaneously preventing images to be viewed by the other of the first or the second eye.

11. The system of claim 8, wherein the wearable viewing device is wirelessly communicatively coupled to the content receiver.

12. The system of claim 8, wherein the content receiver is configured to enable the two-dimensional format to be selected such that the wearable viewing device enables the user to view the video content in one or the other of the two-dimensional format intended for the first eye and the two-dimensional format intended for the second eye.

13. The system of claim 12, wherein the content receiver is configured to enable the three-dimensional format to be selected such that the wearable viewing device enables the user to view the three-dimensional video content in the three-dimensional format.

14. The system of claim 8, wherein the processing unit is further configured to down-convert the three-dimensional video data into the two-dimensional format, wherein down-converting comprises converting the video data into a format perceptible as two-dimensional content.

15. A system for viewing three-dimensional content in a two-dimensional format, comprising:
a wearable viewing device comprising polarized lenses configured to shield both eyes of a user and allow light having a first polarization through the polarized lenses and to prevent light having a second polarization through the polarized lenses;
a content receiver comprising:
a processing unit for executing instructions for delivering three-dimensional video content, the three-dimensional video content comprising a first and second set of images interleaved with one another, the first set of images having the first polarization and the second set of images having the second polarization; and
a communications unit for transmitting the three-dimensional video content to the content display device;
wherein the first set of images may be viewed through the polarized lenses and the second set of images is prevented from being viewed through the polarized lenses.
